# EUROPEAN PATENT SPECIFICATION

(11) **EP 1 080 296 B1**
(45) Date of publication and mention of the grant of the patent: **26.03.2003**
(21) Application number: 99926299.1
(22) Date of filing: 23.04.1999
(51) Int. Cl.: E21B 43/10, E21B 29/10, F16L 11/12, F16L 55/165

(54) **DEFORMABLE LINER TUBE**
VERFORMBARES ROHR
TUBAGE DEFORMABLE

(30) Priority: 23.04.1998 EP 98303146
(43) Date of publication of application: 07.03.2001
(73) Proprietor: SHELL INTERNATIONALE RESEARCH MAATSCHAPPIJ B.V., 2596 HR Den Haag (NL)
(72) Inventor: LOHBECK, Wilhelmus, Christianus, Maria, NL-2288 GD Rijswijk (NL)
(86) International application number: EP9903013
(87) International publication number: WO99056000

(56) References cited:
- FR-A- 721 430
- FR-A- 2 326 229
- NL-A- 8 005 762

## Description

### Background of the invention

The invention relates to a deformable liner tube and to a method of creating a formable lining within a tubular cavity.

It is known from US patent specifications Nos. 3,353,599 and 5,014,779 to insert a corrugated tube into the wellbore of an underground borehole and to expand the tube downhole into a tubular shape.

US patent specification No. 5,366,012 discloses the expansion of a slotted pipe of which the slots open up as a result of the expansion so as to reduce the radial forces needed to expand the pipe.

The use of slotted or initially corrugated pipes has the disadvantage that the expanded pipes have a limited mechanical strength.

International patent application, publication No. WO 98/00626 discloses the expansion of an unslotted cylindrical pipe by means of an expansion mandrel.

A disadvantage of the latter expansion method is that forces to expand the pipe are relatively high and that the pipe contracts as a result of the expansion process.

It is observed that French patent specifications Nos. 721430 and 2326229 disclose flexible, large diameter offshore riser pipes with inflatable axial, radial, or helical tubules formed in the pipe wall to provide flexibility if the pipes are used to pump cold seawater from the seabottom to the surface. Netherlands patent application No. 8005762 discloses a thermally insulated plastic pipe having a series of axial bores in the pipewall. None of these known pipes is designed or used for creating a formable lining within a cavity, such as an underground borehole.

The method and tube according to the preamble of claims 1 and 8 are known from French patent specification No. 721430.

It is an object of the present invention to alleviate the disadvantages of the known techniques and to provide a method of creating a formable lining within a tubular cavity using a robust and deformable tube which can be expanded or otherwise deformed by using a relatively low deformation force.

### Summary of the Invention

The method and tube according to the invention are characterized by the characterizing features of claims 1 and 8.

The deformation of the liner tube according to the invention may involve flattening or other change of the circumferential shape of the tubules, which requires principally bending forces which are significantly lower than the tension forces that are required to expand a tubular cylindrical pipe.

It may be required to obtain a liner tube which can be deformed easily in an axial or in a radial direction or in both directions. A radially deformable liner tube is useful if the tube is for example to be used as an oil and/or gas production tubing which is to be inserted into a relatively narrow and irregularly shaped underground wellbore. An axially deformable liner tube is useful if the tube is a production liner or tubing, a well casing or other well tubular which is installed in a compacting reservoir where there is a risk of buckling of the well tubulars as a result of the compaction process.

If a radially deformable liner tube is required it is preferred that the wall of the tube is at least partly formed by a series of axial tubules which each extend in a direction substantially parallel to a longitudinal axis of the tube such that upon a radial deformation of the tube the axial tubules are at least partly deformed.

If an axially deformable liner tube is required it is preferred that the wall of the tube is at least partly formed by a series of toroidal tubules which extend in a substantially circular direction around a longitudinal axis of the tube such that upon axial deformation of the tube the toroidal tubules are at least partly flattened or otherwise deformed.

If a liner tube is required which is both axially and radially deformable, it is preferred that the wall of the tube is at least partly formed by one or more helical tubules which extend in a substantially helical direction with respect to a longitudinal axis of the tube such that upon deformation of the tube in a direction which is oriented at an angle relative to a longitudinal direction of each of the helical tubules, at least one of the helical tubules is deformed.

The tubules may be made of a metal, plastic, rubber or other material and may be welded, brazed, bonded or otherwise secured to adjacent tubules or other parts of the wall of the tube.

The tubules may before expansion have a folded, cylindrical, elliptical or prismatic shape and may as a result of the expansion be unfolded or flattened into an elliptical, cylindrical or prismatic shape.

Suitably, the tubules contain at the outer periphery of the tube openings or weak spots which open up as a result of the deformation process such that one or more fluids are squeezed from the interior of the tubules -into the space surrounding the tube.

In that case the fluids that are squeezed from the interior of the tubules may contain one or more chemicals, such as a chemical treatment fluid or components of a liquid cement slurry or components of a curing agent, which components are only mixed when or after they have been squeezed out of the tubules.

### Brief description of the drawings

The invention will be described in more detail and by way of example with reference to the accompanying drawings, in which
Fig. 1 is a cross-axial sectional view of a tube both before and after expansion, which tube has a wall that is made of a series of axial tubules which are cylindrical before expansion and elliptical after expansion;
Fig. 2 is a cross-axial sectional view of a tube both before and after expansion, which tube has a wall that comprises a series of axial tubules which are prismatic before expansion and elliptical after expansion;
Fig. 3 is a cross-axial sectional view of a tube both before and after expansion, which tube has a wall that is made of a series of axial tubules which are elliptical both before and after expansion;
Fig. 4 is a cross-axial sectional view of a tube before expansion where the wall of the tube comprises a series of axial tubules and the tube is folded into a substantially flat shape before it is unfolded and expanded;
Fig. 5 is a longitudinal sectional view of a tube which comprises a wall that is made of a series of toroidal tubules;
Fig. 6 is an enlarged detail showing the cylindrical shape of three of the toroidal tubules that are encircled in Fig. 5;
Fig. 7 is a longitudinal sectional view of the tube of Fig. 5 after axial compression of the tube;
Fig. 8 is an enlarged detail showing the elliptical shape of three of the toroidal tubules that are encircled in Fig. 7;
Fig. 9 is a cross-axial sectional view of a radially expandable tube comprising six axial or helical tubules both before and after expansion of the tube;
Fig. 10 is a cross-axial sectional view of an unexpanded tube of which the wall comprises a series of folded tubules which unfold into a cylindrical shape during the process of expanding the tube;
Fig. 11 is a cross-axial sectional view of another unexpanded tube configuration where the wall comprises a series of folded tubes which unfold into a cylindrical shape during the process of expanding the tube; and
Fig. 12 is a cross-axial sectional view of an unexpanded tube which folds open during the expansion process and which comprises a tubule which acts as a plastic hinge and which is flattened as a result of the expansion process.

### Detailed description of the invention

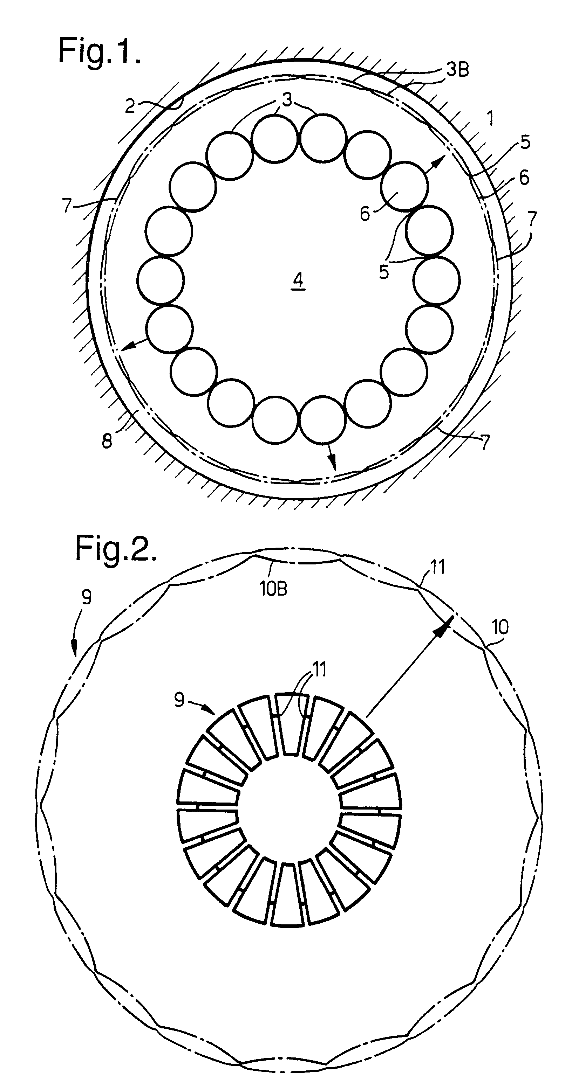

Referring now to Fig. 1 there is shown a tube 1 in a cylindrical wellbore or other cavity 2, which tube 1 has a wall that is made up of a series of axial tubules 3 which are substantially cylindrical before expansion of the tube 1 and elliptical after expansion of the tube 1 to an enlarged diameter, as illustrated by reference numeral 3B.

The tube 1 can be expanded by an expansion mandrel (not shown) or by increasing the hydraulic pressure in the interior 4 of the tube 1. As a result of the expansion process the tubules 3 are subject to a bending process so that relatively low forces are required.

If the tubules 3 are made of steel or another metal then it is preferred that the tubules 3 are sintered, welded or brazed together along the length of the areas 5 where the tubules 3 touch each other.

If the tubules 3 have an impermeable wall and the tube 1 is used temporarily in the cavity 2, for example to provide a temporary seal, then the tube 1 can be radially contracted again by pumping a high pressure fluid into the interiors 6 of the tubules 3, which will induce the flattened tubules 3B to resume their tubular shape, so that the tube 1 radial shrinks and can be easily removed from the cavity 2.

If the tube 1 is to be used permanently in the cavity 2, for example if the tube 1 is to be used as a well casing, then at least some of the tubules 3 may be filled with liquid components of a cement slurry or other curing agent, such as a silicone gel and the outer wall of these tubules may contain openings 7, or weak spots which are opened as a result of the expansion process, via which said liquid components are squeezed into the surrounding annular space 8 surrounding the expanded tube 1 and the liquid components mix up and cure to a hardened cement, silicone or other cured sealing composition.

Fig. 2 illustrates an alternative embodiment of the deformable tube according to the invention. This tube 9 is also radially deformable and comprises a series of tubules 10 which are prismatic before expansion and elliptical after expansion, as illustrated by reference numeral 10B.

The tubules 10 are arranged substantially parallel to the longitudinal axis 11 at the centre of the tube 9. The tubules 10 are made of steel or another metal and are connected to each other by longitudinal welded, brazed or sintered bonds 11.

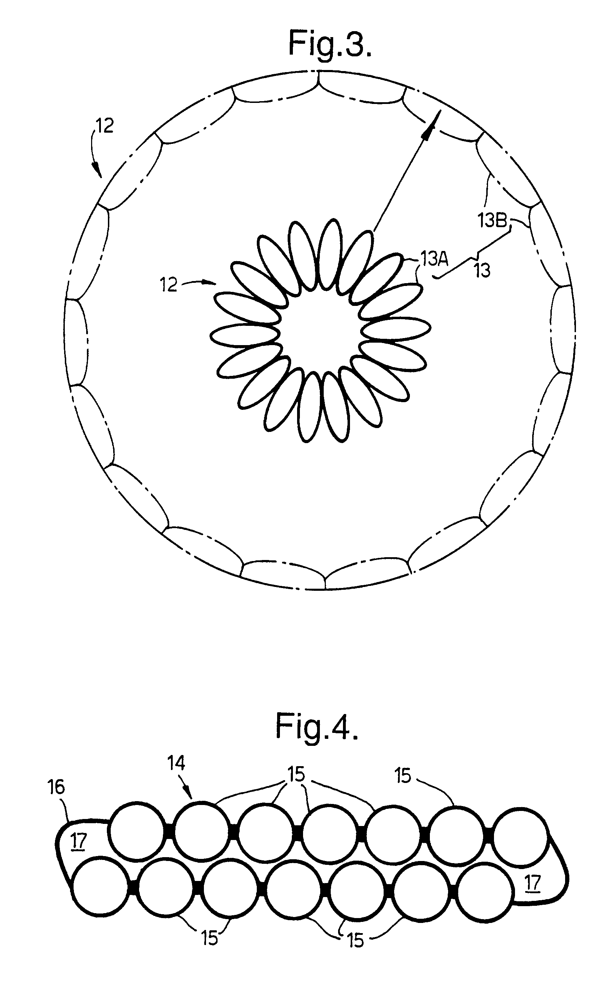

Fig. 3 shows yet another embodiment of the deformable tube according to the invention, in which the tube 12 is radially deformable and comprises a series of tubules 13 which are elliptical before and which have an elliptical, almost flattened shape after radial expansion of the tube 12.

In this embodiment the tubules 13 deform from a first elliptical shape, illustrated by reference numeral 13A in which the largest width of the elliptical tubules 13A has a radial orientation into a second elliptical shape, illustrated by reference numeral 13B in which the largest width of the elliptical tubules 13A has a tangential orientation.

Referring now to Fig. 4 there is shown a deformable tube 14 which comprises a series of axial tubules 15, wherein two pairs of tubules at opposite sides of the tube 14 are interconnected by plastic hinges 16. These plastic hinges 16 allow the tube 14 to be stored and transported in a flattened shape e.g. around a reeling drum (not shown).

When the tube 14 is then unreeled from the reeling drum it can be brought into a cylindrical shape by a guide funnel (not shown). If the tube 14 is to be used inside a well or inside another tubular the cylindrical tube 14 is then reeled into the wellbore or the interior of the other tubular and expanded for example by pumping a high pressure fluid into the interior 17 of the tube 14.

The initially flattened tube configuration shown in Fig. 4 allows an easy storage and transport of the tube 14, e.g. on a small diameter reeling drum, during the manufacturing stage and during transport from the manufacturing site to the site where the tube 14 is to be used.

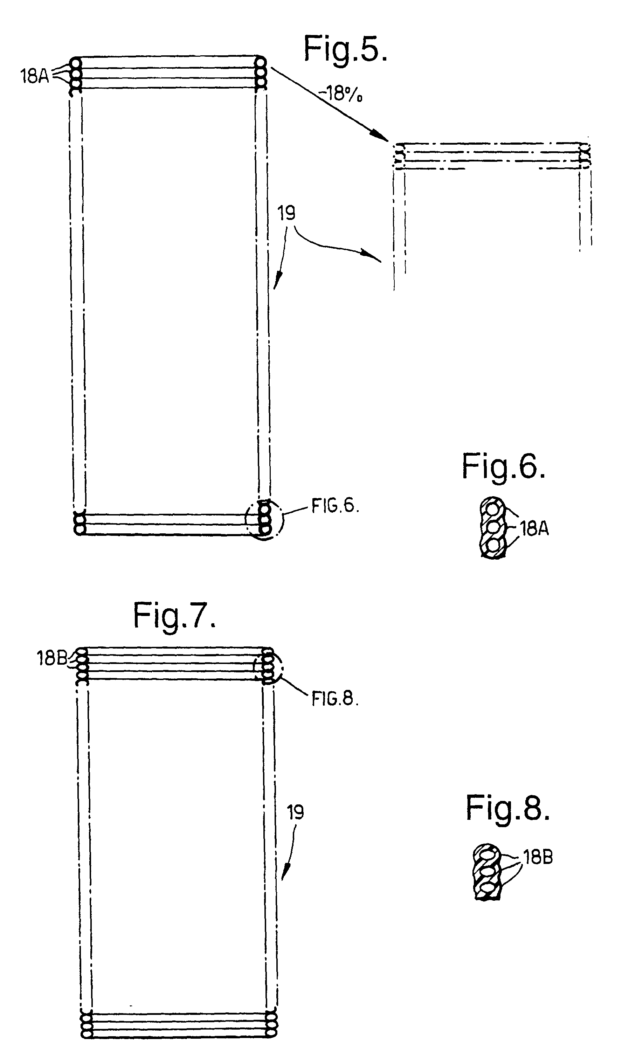

Figures 5, 6, 7 and 8 show yet another embodiment of the deformable tube according to the invention in which the tubules 18A, B have a toroidal shape in order to make the tube 19 axially deformable.

The tube 19 shown in Fig. 5 can be a production liner in a compacting oil or gas bearing formation, where as shown in detail in Fig. 6 the toroidal tubules 18A have a substantially cylindrical shape. In the configuration shown in Fig. 7 the tube 19 has axially contracted so that its length is 18% shorter than its original length shown in Fig. 5.

As a result of the axial contraction of the tube 19 the tubules 18B shown in Fig. 7 have been deformed into an elliptical shape, as is shown in more detail in Fig. 8.

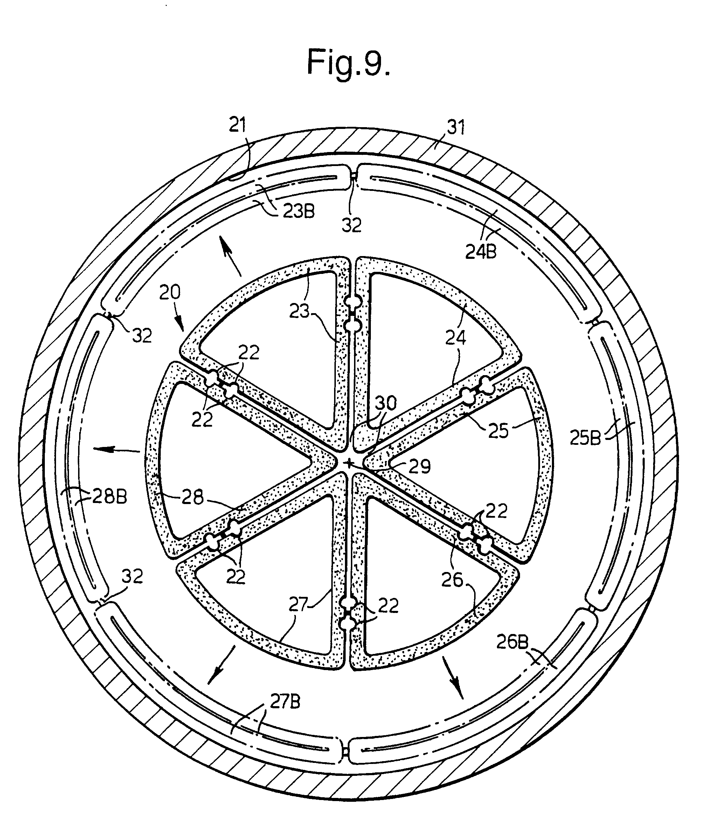

Referring now to Fig. 9 there is shown a tube 20 which is expanded within a wellbore 21 or other cavity.

The tube 20 has a wall that comprises six tubules 23, 24, 25, 26, 27 and 28 which extend in an axial or helical configuration relative to the longitudinal axis 29 of the tube 20.

Adjacent tubules 23, 24, 25, 26, 27 and 28 are interconnected along their length by elongate welds 32. Plastic hinges 22 are located in the walls of the tubules 23-28 at both sides of each weld 32.

The unexpanded tube 20 is shown at the centre of the drawing. The six unexpanded tubules 23-28 each have the form of a pie sector and only a minor gap 30 is present between adjacent tubules 23-28. To expand the tube 20 a pressurized fluid is pumped into the gaps 30 which will induce the tube 20 to expand until the walls of the tubules 23-28 are stretched and/or the outer walls of the tubules 23B-28B are pressed against the wellbore 21.

The volume-efficient tube configuration shown in Fig. 9 is attractive if the tube 20 is to be inserted into the wellbore 21 via a narrow excess, such as a small diameter production tubing. Furthermore the internal volume of the unexpanded tubules 23-28 is relatively large whereas the internal volume of the expanded tubules 23B-28B is relatively small so that if the walls at the outer circumference of the tubules 23-28 are perforated or become during expansion otherwise fluid permeable a relatively large volume of fluids is squeezed from the interior of the tubules 23-28 into the surrounding annulus and/or formation.

In this way a relatively large volume of a sealing agent and/or treatment fluid can be injected into the annulus surrounding the tube 20 and/or the formation 31 surrounding the wellbore 21.

The externally permeable tube 20 is very suitable to inject treatment fluids into an underground formation 31 which comprises along the length of the wellbore 21 layers of varying permeability. If the outer walls of the tubules 23-28 have a significantly lower fluid permeability than the surrounding formation 27, then, as soon as the outer wall of the tubules 22B-26B is pressed against the wellbore 21, a relatively constant flux of treatment fluid will be squeezed into the various surrounding formation layers so that the risk of injection of treatment fluid mainly into the permeable formation layers and by-passing of less permeable layers is minimized.

If the tube 20 is used as a treatment fluid injection tool so that it only serves as a temporary liner then the outer walls of the tubules 23-28 may be made of a permeable rubber and/or a fabric and the inner walls of the tubules 23-28 which face the interior 30 of the tube 30 may be made of an impermeable rubber. After injection of the treatment fluids the pressure in the interior 30 of the tube 20 may be reduced so that the tube 20 radially contracts and can be removed from the borehole.

Instead of allowing the tube 20 to contract after fluids have been injected into the formation the tube 20 may be allowed to harden in the expanded position against the wellbore 21 by impregnating the fabric or other material with a slowly curing epoxy or other plastic composition, so that the solidified tube 20 then serves. as a well liner.

The adjacent tubules may also have different shapes and be filled with different fluids wherein as a result of the expansion process initially openings are created between adjacent tubules through which the fluids are mixed within selected tubules in which openings are created in the outer wall at a later stage of the expansion process through which the premixed fluids are then squeezed into the surrounding annulus.

The tube 20 and the tube configurations shown in Figs. 1-4 may also have walls that are made of a sieve material. In that case the tube may be expanded by an expansion cone or by a balloon that is inflated in the interior of the tube.

Since the sieve material that then forms the walls of tubules is mainly bent and not or hardly stretched the sieve opening size will remain fairly constant during the expansion process. The expanded tube of sieve material then serves as a filter that prevents sand and other solid materials to enter the wellbore 21.

The radially expandable tube 20 and the other radially expandable tube configurations shown in Figs. 1-4 may also be made of tubules 23-28 which are made of a fluid impermeable material, such as steel which only deforms if the pressure in the interior 30 of the tube exceeds a pre-set level. In that case the tube may be installed as a production tubing which serves as a downhole blow-out preventer which expands and seals of the annulus surrounding the production tubing if a blow-out occurs. The radially expandable tube configuration shown in Fig. 9 can also be used as a drill string. In that case drilling mud is pumped through the interior of the tubules 23A-28A during drilling. At the end of a drilling cycle high pressure fluid is injected into the interior 30 of the tube 20 so that the tube 20 is expanded against the borehole wall 21 and forms a lining of the wellbore and the drill bit and downhole motor assembly is pulled to the surface by a wireline or coiled tubing passing through the interior 30 of the tube 20 and also serves as an expansion cone.

If only minor expansion of the tube is required then the wall of the tube may be provided with only one or a few axial or helical tubules.

If the walls of the tube 20 or the other radially expandable configurations are made of a rubber or other elastically deformable material then the expanded tube may serve as a high expansion packer or bridge plug.

It will be understood that if the tubules are oriented in an axial direction a radially deformable tube will be obtained. If the tubules are oriented in a circumferential direction as shown in Figs. 5-8 then an axially deformable tube will be obtained.

If the tubules are oriented in a helical direction the tube will be deformable both in axial and radial directions and the pitch angle of the helical configuration of the tubules will then influence the degree in which the tube is axially or radially deformable.

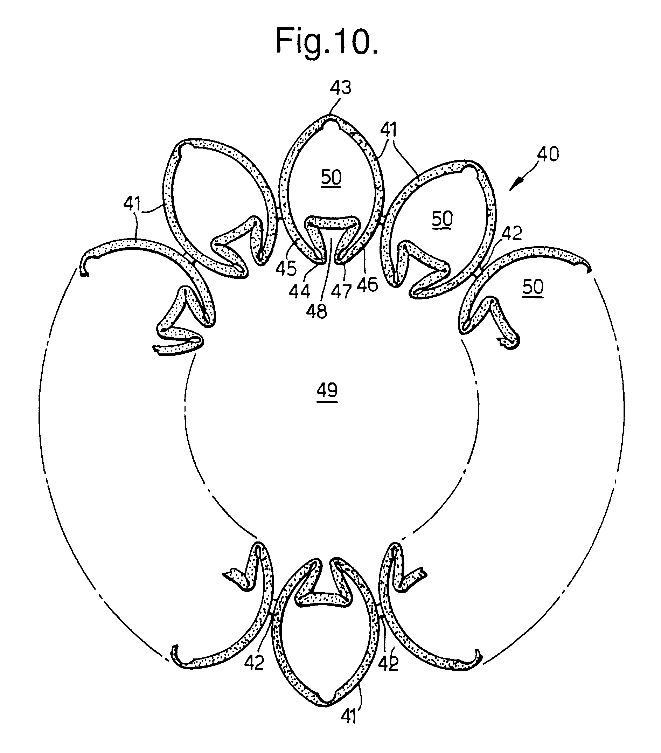

Fig. 10 shows a configuration where a tube 40 comprises a wall that consists of a series of axial foldable tubules 41.

If the tubules 41 are made of steel then they are interconnected side by side along their length by axial welds 42. Each tubule 41 comprises at the outer circumference of the tube 40 a single plastic hinge 43 and at the inner circumference of the tube 40 a set of four plastic hinges 44, 45, 46 and 47. Each of these plastic hinges 43-47 is formed by machining an axial groove in the inner and/or outer surface of the wall of. the tubule 41.

The set of four plastic hinges 44-47 defines a wall segment where the tubules 41 can be folded inwardly to form a U- or delta-shaped recess 48 that faces the interior 49 of the tube 40.

The tube 40 is expanded by pumping a pressurized fluid into the interiors 50 of the tubules 41 which causes the tubules to unfold by hinging about the plastic hinges 43-47 so that the tubules 41 each obtain a cylindrical shape (not shown).

As a result of the unfolding of the tubules 41 the tube 40 obtains a larger external and internal diameter.

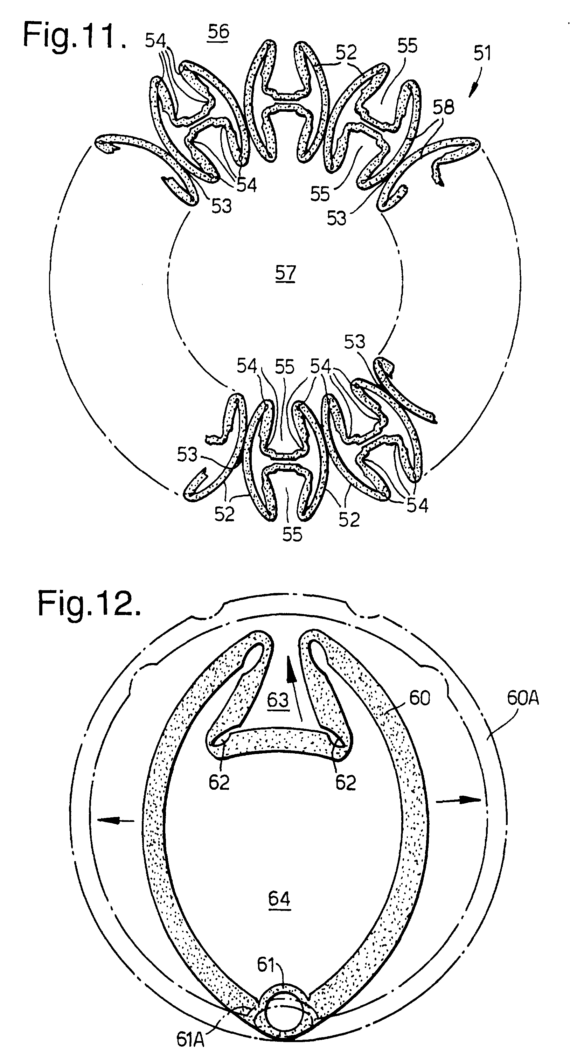

Fig. 11 shows another tube 51 which comprises a wall that consists of a series of axial foldable tubules 52.

If the tubules 52 are made of steel then they are interconnected side by side along their length by axial welds 53. Each tubule 52 comprises both at the outer and the inner circumference of the tube 51 a set of four plastic hinges 54 that are formed by machining axial grooves in the inner and/or outer surface of the wall of each tubule 52.

Each set of four plastic hinges 54 defines a wall segment where the tubules 52 can be folded inwardly to form a U- or delta-shaped recess 55 that faces either the exterior 56 or the interior 57 of the tube 51.

The tube 51 is expanded by pumping a pressurized fluid into the interiors 58 of the tubules 51 which causes the tubules 52 to unfold by hinging about the plastic hinges 54 so that the tubules each obtain a cylindrical shape (not shown).

As a result of the unfolding of the tubules the tube 51 obtains a larger external and internal diameter.

Fig. 12 shows a foldable tube 60 which comprises at its lower side a single plastic hinge that is formed by an axial tubule 61 and at its upper side a set of four plastic hinges 62 that are formed by machining axial grooves in the outer or inner surface of the wall of the tube 60.

The four plastic hinges 62 define a delta-shaped recess 63 at the upper side of the tube 60, when the tube is in its folded shape.

The tube 60 is unfolded by pumping a pressurized fluid into the interior 64 of the tube 60. This causes the tube to unfold in the direction of the arrows into the cylindrical shape which is illustrated by the broken lines 60A. The tubule 61 then acts as a plastic hinge and obtains as a result of the unfolding of the tube 60 the elliptical shape which is illustrated by broken lines 61A.

The tubule 61 is made of a plastically deformable material, such as a formable high-strength low-alloy or dual phase steel grade, which also provides flexibility to the tube 61 in circumferential direction during the unfolding procedure. After the unfolding procedure a curing agent may be pumped into the interior 65 of the elliptical tubule 61A to reinforce the tubule 61A. The interior 65 of the tubule 61 may comprise electrical and/or hydraulic conduits for transmission of electric and/or hydraulic power and/or signals along the length of the tube.

If the tube is used as a liner tube in an oil and/or gas production well then gas lift, stimulation, treating or well killing fluids may be pumped through one or more tubules to a selected depth in the well and then mixed with the produced fluids.

The embodiments of the deformable tube shown in the drawings provide a tube which can be deformed easily and which can be reeled on a reeling drum. The tube can be unreeled from the drum and injected into an underground borehole or other cavity in which the tube is to be used. The tube is subsequently deformed inside the borehole or other cavity by changing the tubular shape of one or more tubules in the wall of the tube. The deformation may involve flattening, unfolding or other deformation of the tubule or tubules.

## Claims

1. A method of using a tube (1) having a wall which is at least partly formed by a number of tubules (3) by deforming the tube (1) by changing the circumferential shape of the tubule or tubules (3), **characterized in that** the tube (1) is used as a liner tube (1) for creating a formable lining within a tubular cavity (2) by positioning the liner tube (1) at a selected location within the cavity (2) and then deforming the liner tube (1) by changing the circumferential shape of the tubule or tubules (3).

2. The method of claim 1, wherein the liner tube (1) is radially expanded by exerting a radial hydraulic or mechanical pressure to the inner wall of the liner tube (1) thereby flattening or otherwise changing the circumferential shape of the tubule or tubules (3) and pressing the outer wall of the liner tube (1) against the cavity wall (2).

3. The method of claim 1 or 2, wherein the cavity (2) is formed by an underground wellbore or by a wellbore or other tubular and wherein the liner tube (1) is used as an expandable liner for temporarily or permanently lining of a selected length of the wellbore or tubular.

4. The method of claim 1, wherein before deformation of the liner tube (1) the tubules (3) have a substantially cylindrical shape and deform into a substantially elliptical or flattened shape in response to deformation of the tube.

5. The method of claim 1, wherein before deformation of the liner tube (9) the tubules (10) have a substantially prismatic shape and deform into a substantially flattened shape in response to deformation of the tube (9).

6. The method of claim 1, wherein the tubules contain at the outer periphery of the tube openings or weak spots which open up as a result of the deformation process such that one or more fluids are squeezed from the interior of the tubules into the space surrounding the liner tube.

7. The method of claim 6, wherein the fluids that are squeezed from the interior of the tubules contain one or more chemicals, such as components of a liquid cement slurry, components of a curing agent or a chemical treatment fluid.

8. A deformable tube (1) having a wall which is at least partly formed by a number of tubules (3), wherein the circumferential shape of at least one tubule (3) is at least partly changed in response to deformation of the tube (1), **characterized in that** the tube (1) is a liner tube for creating a formable lining in a cavity (2).

9. The deformable liner tube of claim 8, wherein the tubules (3,9,13,15,18) are made of metal and the sides of a pair of adjacent tubules substantially touch each other and are sintered, welded, spot welded, brazed, bonded, or otherwise secured to each other.

10. The deformable liner tube of claim 8, wherein the tubules (3,9,13,15,18) comprise an outer wall made of a permeable plastic or elastomeric material or a permeable fabric and the sides of adjacent tubules substantially touch each other and are bonded to each other.

11. The deformable liner tube of claim 8 or 9, wherein one or more tubules (41,52) are foldable tubules which have a wall in which at least three longitudinal hinge lines (43,44,47,54,62) are formed such that during storage and transport an inwardly folded wall segment of the tubule is created, which wall segment is unfolded during the deformation process by enhancing pressure inside the tubule (41,52,61).

## Patentansprüche

1. Verfahren zur Verwendung eines Rohres (1) mit einer Wand, die zumindest teilweise aus einer Anzahl von Röhrchen (3) durch Verformung des Rohres (1) unter Änderung der Umfangsgestalt des Röhrchens oder der Röhrchen (3) gebildet ist, **dadurch gekennzeichnet, daß** das Rohr (1) als Futterrohr (1) zur Bildung eines verformbaren Futters innerhalb eines rohrförmigen Hohlraumes (2) verwendet wird, indem das Futterrohr (1) an einer vorbestimmten Stelle innerhalb des Hohlraumes (2) angeordnet und das Futterrohr (1) danach durch Änderung der Umfangsgestalt des Röhrchens oder der Röhrchen (3) verformt wird.

2. Verfahren nach Anspruch 1, bei welchem das Futterrohr (1) durch Ausüben eines radialen hydraulischen oder mechanischen Druckes auf die Innenwand des Futterrohres (1) radial expandiert wird, wodurch die Umfangsgestalt des Röhrchens oder der Röhrchen (3) abgeflacht oder auf andere Weise verändert wird, und die Außenwand des Futterohres (1) gegen die Hohlraumwand (2) gepreßt wird.

3. Verfahren nach Anspruch 1 oder 2, bei welchem der Hohlraum (2) durch ein Untergrundbohrloch oder ein Bohrloch oder einen anderen rohrförmigen Hohlraum gebildet ist, und bei welchem das Futterrohr (1) als expandierbares Futter zur Bildung eines temporären oder permanenten Futters für eine vorbestimmte Länge des Bohrloches oder des rohrförmigen Hohlraumes verwendet wird.

4. Verfahren nach Anspruch 1, bei welchem vor der Verformung des Futterrohres (1) die Röhrchen (3) im wesentlichen zylindrische Gestalt haben und auf Grund der Verformung des Rohres in eine im wesentlichen elliptische oder abgeflachte Gestalt verformt werden.

5. Verfahren nach Anspruch 1, bei welchem vor der Verformung des Futterrohres (9) die Röhrchen (10) im wesentlichen prismatische Gestalt haben und auf Grund der Verformung des Rohres (9) in eine im wesentlichen abgeflachte Gestalt verformt werden.

6. Verfahren nach Anspruch 1, bei welchem die Röhrchen am Außenumfang des Rohres Öffnungen oder Schwachstellen aufweisen, die sich infolge des Verformungsvorganges öffnen, derart, daß eines oder mehrere Fluide aus dem Inneren der Röhrchen in den Raum um das Futterrohr gedrückt werden.

7. Verfahren nach Anspruch 6, bei welchem die Fluide, die aus dem Inneren der Röhrchen herausgedrückt werden, eines oder mehrere Chemikalien enthalten, wie Komponenten eines flüssigen Zementschlammes, Komponenten eines Härtungsmittels oder eines chemischen Behandlungsfluids.

8. Verformbares Rohr (1) mit einer Wand, die zumindest teilweise durch eine Anzahl von Röhrchen (3) gebildet ist, wo die Umfangsgestalt zumindest eines der Röhrchen (3) auf Grund einer Verformung des Rohres (1) zumindest teilweise verändert wird, **dadurch gekennzeichnet, daß** das Rohr (1) ein Futterrohr zur Bildung eines verformbaren Futters in einem Hohlraum (2) ist.

9. Verformbares Futterrohr nach Anspruch 8, bei welchem die Röhrchen (3, 9, 13, 15, 18) aus Metall bestehen, und die Seiten eines Paares benachbarter Röhrchen, die einander im wesentlichen berühren, gesintert, geschweißt, punktgeschweißt, gelötet, verklebt oder auf andere Weise aneinander befestigt sind.

10. Verformbares Futterohr nach Anspruch 8, bei welchem die Röhrchen (3, 9, 13, 15, 18) eine Außenwand aufweisen, die aus einem durchlässigen Kunststoff oder Elastomermaterial oder einem durchlässigen Stoff bestehen, und die Seiten benachbarter Röhrchen einander im wesentlichen berühren und aneinander gebunden sind.

11. Verformbares Futterrohr nach Anspruch 8 oder 9, bei welchem eines oder mehrere der Röhrchen (41, 52) faltbare Röhrchen sind, die eine Wand haben, in welcher zumindest drei Längsgelenklinien (43, 44, 47, 54, 62) ausgeformt sind, derart, daß während der Lagerung und des Transportes ein einwärts gefaltetes Wandsegment des Röhrchens gebildet wird, welches Wandsegment während des Verformungsvorganges durch Erhöhen des Druckes innerhalb des Röhrchens (41, 52, 61) entfaltet wird.

## Revendications

1. Procédé pour l'utilisation d'un tube (1) présentant une paroi qui est formée au moins en partie par un certain nombre de tubulures (3), par déformation du tube (1) en modifiant la forme de la circonférence de la ou des tubulures (3), **caractérisé en ce que** le tube (1) est utilisé comme tube de cuvelage (1) pour créer un cuvelage façonnable (1) à l'intérieur d'une cavité tubulaire (2) en plaçant le tube de cuvelage (1) en un emplacement sélectionné dans la cavité (2) et en déformant ensuite le tube de cuvelage (1) en modifiant la forme de la circonférence de la ou des tubulures (3).

2. Procédé selon la revendication 1, dans lequel le tube de cuvelage (1) est dilaté radialement en exerçant une pression radiale, hydraulique ou mécanique, sur la paroi intérieure du tube de cuvelage (1), pour ainsi aplatir ou modifier d'une autre manière la forme de la circonférence de la ou des tubulures (3) et en repoussant la paroi extérieure du tube de cuvelage (1) contre la paroi (2) de la cavité.

3. Procédé selon la revendication 1 ou 2, dans lequel la cavité (2) est formée par un puits souterrain ou par un puits ou un autre conduit tubulaire, et dans lequel le tube de cuvelage (1) est utilisé comme cuvelage dilatable pour couvrir de façon temporaire ou permanente une partie sélectionnée de la longueur du puits ou du conduit tubulaire.

4. Procédé selon la revendication 1, dans lequel, avant déformation du tube de cuvelage (1), les tubulures (3) présentent une forme essentiellement cylindrique et se déforment en une forme essentiellement elliptique ou aplatie en réponse à la déformation du tube.

5. Procédé selon la revendication 1, dans lequel, avant la déformation du tube de cuvelage (9), les tubulures (10) présentent une forme essentiellement prismatique et se déforment en une forme essentiellement aplatie en réponse à la déformation du tube (9).

6. Procédé selon la revendication 1, dans lequel les tubulures contiennent à la périphérie extérieure du tube des ouvertures ou des points faibles qui s'ouvrent en résultat de l'opération de déformation de telle sorte qu'un ou plusieurs fluides sont refoulés depuis l'intérieur des tubulures jusque dans l'espace entourant le tube de cuvelage.

7. Procédé selon la revendication 6, dans lequel les fluides qui sont refoulés depuis l'intérieur des tubulures contiennent un ou plusieurs agents chimiques, par exemple les composants d'un lait de ciment liquide, les composants d'un agent de durcissement ou d'un fluide de traitement chimique.

8. Tube déformable (1) présentant une paroi qui est formée au moins en partie par un certain nombre de tubulures (3), la forme de la circonférence d'au moins une tubulure (3) étant modifiée au moins en partie en réponse à la déformation du tube (1), **caractérisé en ce que** le tube (1) est un tube de cuvelage destiné à créer un cuvelage façonnable dans une cavité (2).

9. Tube de cuvelage déformable selon la revendication 8, dans lequel les tubulures (3, 9, 13, 15, 18) sont réalisées en métal, les côtés de deux tubulures adjacentes se touchant essentiellement l'un l'autre et étant frittés, soudés, soudés par points, brasés, collés ou fixés l'un à l'autre d'une autre manière.

10. Tube de cuvelage déformable selon la revendication 8, dans lequel les tubulures (3, 9, 13, 15, 18) comprennent une paroi extérieure réalisée en matériau perméable, plastique ou élastomère ou en un tissu perméable, les côtés de tubulures adjacentes se touchant essentiellement l'un l'autre et étant reliés l'un à l'autre.

11. Tube de cuvelage déformable selon la revendication 8 ou 9, dans lequel une ou plusieurs tubulures (41, 52) sont des tubulures pliables qui présentent une paroi dans laquelle au moins trois lignes longitudinales de charnière (43, 44, 47, 54, 62) sont formées de telle sorte qu'un segment de paroi replié vers l'intérieur de la tubulure soit créé pendant l'entreposage et le transport, lequel segment de paroi est déplié pendant l'opération de déformation en augmentant la pression à l'intérieur de la tubulure (41, 52, 61).
